# EUROPEAN PATENT SPECIFICATION

(11) **EP 0 915 037 B1**
(45) Date of publication and mention of the grant of the patent: **30.07.2003**
(21) Application number: 98309073.9
(22) Date of filing: 05.11.1998
(51) Int. Cl.: A01D 17/10, B65G 15/14

(54) **Agricultural machinery incorporating improved elevator system**
Landwirtschaftliche Maschine mit Aufzugsystem
Machine agricole avec système élévateur

(30) Priority: 07.11.1997 GB 9723512
(43) Date of publication of application: 12.05.1999
(73) Proprietor: REEKIE MANUFACTURING LTD., Forfar, Tayside, Angus DD8 1UQ (GB)
(72) Inventor: Mitchell, James Fraser, Aberlemno by Forfar Tayside DD8 3PD (GB)
(74) Representative: Szczuka, Jan Tymoteusz

(56) References cited:
- DE-A- 2 847 698
- FR-A- 2 285 317
- US-A- 4 284 145
- US-A- 4 382 471
- US-A- 5 069 292

## Description

The present invention relates to an improved upward conveyor arrangement for lifting field produce, such as root crops, upwardly in agricultural machinery. More specifically, the invention relates to mobile agricultural machinery, especially a harvester or grader, incorporating such an improved conveyor arrangement.

Root crop harvesters often include an elevator unit attached to one side of the main body of the harvester, for lifting tubers e.g. potatoes, upwardly and discharging them from an upper end thereof into a hopper or container of another vehicle travelling alongside the harvester, which vehicle transports the harvested crop back to a shed or other storage area, or a packing plant. Such elevators are commonly in the form of "bucket conveyors" designed to project upwardly from a lower end of the harvester, at a relatively steep angle, reaching an uppermost point from where the elevator changes direction and slopes downwardly to a free end from which the tubers are expelled downwardly into a container or hopper disposed therebelow. The elevator thus presents a generally arched, or inverted V-shape, in side elevation. The "bucket conveyor" is in the form of an endless belt driven by rollers around which the belt travels, the belt having a plurality of evenly spaced paddles or fins projecting therefrom defining tuber-holding volumes or "buckets" therebetween. In use, tubers are dropped down into the "buckets" at a lower end of the elevator disposed below a tuber-carrying conveyor in the main body of the harvester; the tubers are conveyed upwardly in the buckets, each bucket holding a batch of tubers, towards the arch in the elevator, from where the "buckets" travel downwardly to a free end of the elevator where the tubers drop out of the buckets (as the endless belt travels around an end roller therein) into the container disposed below.

There are several problems associated with this type of elevator. Firstly, the elevator tends to exert large forces on the harvester tending to tip it sideways, due to the torque exerted by the weight of the elevator, and particularly the weight of the elevator when it is carrying a large load of harvested tubers e.g. potatoes, and earth and/or stones. Such loads can become massive when the crop being harvested is also wet and encased in mud etc. Such an elevator design, and the resulting engineering considerations which must be taken into account when designing the elevator and harvester mean that the harvester must be of extremely strong and heavy construction in order to be capable of supporting the elevator which itself must be strong enough to take the maximum possible loading thereon. Even so, the elevator can exert extreme strain on the harvester when it is heavily loaded and can, in the worst scenario, make the harvester dangerously unstable.

Secondly, the use of such bucket-style conveyors often leads to undesirable crop damage. The need to drop the potatoes down into the buckets of the lower end of the conveyor leads to damage of the potatoes as they fall. Furthermore, as the potatoes are carried in loose batches in the buckets themselves further damage can occur as the potatoes are conveyed upwardly and downwardly therein due to the potatoes tumbling and knocking against each other inside the buckets, leading to bruising and damage to the potatoes. This, in turn, can lead to decay and/or deterioration of the harvested crop, resulting in poorer quality produce for the farmer, and ultimately for the consumer. Prevention of damage to the harvested potatoes is thus an important concern for the farmer. Further disadvantages are that to incorporate the bucket-style conveyors into harvesters it is commonly necessary to design the harvester so as to have one large wheel and one smaller wheel in opposing relationship on opposite sides of the harvester: this is because a lot of room is required on one side of the harvester to incorporate the lower end of the lifting conveyor into the harvester, in a position such that potatoes may be dropped into the buckets thereof.

US 4 382 471 discloses a beet elevator in which the beets are lifted between a lugged belt, and a belt having flexible fingers.

Other types of conveyors have been used in other fields for transporting goods vertically, or in an upwardly inclined direction. FR-A-2 285 317 describes a conveyor for transporting sacks, bails or packets of goods vertically upwards and comprising two parallel conveyors moving in the same direction which define a conveying channel therebetween, the belts being provided with undulating or ribbed surfaces for gripping the sacks, bails or packets conveyed therebetween. This conveyor is designed for conveying packets of a predetermined, constant shape and size and is intended for use in docks and quays, for loading and unloading from shipping vessels.

WO95/30610 discloses a conveyor made from two equal length, straight conveyor units which are opposed face to face to define a conveying channel therebetween, the conveyor units each comprising a conveyor provided with a plurality of projections across the surface thereof for engaging and supporting material vertically in the conveying channel. This conveyor is intended to be disposed at an angle to the vertical, for conveying material upwardly along a straight, linear path only, a lower end of one of the conveyor units extending beyond the end of the other to assist the infeed of material into the conveying channel. Several such conveyors are required to convey goods in an indirect path.

It is an object of the present invention to avoid or minimise one or more of the foregoing disadvantages.

This is achieved by the features of claim 1.

According to the present invention we provide mobile agricultural machinery as claimed in claim 1.

An advantage of the claimed machinery is that by incorporating a generally vertical lifting portion in the elevator the need for a sloping elevator section extending a considerable distance outwardly from the side of the machinery is avoided. In this connection it will be appreciated that the maximum benefit in reducing torque exerted on the machinery by the weight of the elevator and its load acting on the machine, will be obtained by having the elevator extending substantially vertically. Nevertheless considerable benefits can still be obtained with use of conveyors departing to a limited extent, e.g. up to 20°, preferably no more than 10°, from the vertical.

The elevator may, for example, consist of two substantially vertically extending conveyor units, defining a conveying passage therebetween, or alternatively, and preferably, comprise a substantially vertical section with one or more generally horizontal sections at the upper and/or lower ends of the vertical section, for outfeed or infeed of tubers out of/into the conveying passage, and for providing conveying between laterally spaced positions, each of which may be onboard or outboard of the machinery.

Said elevator system preferably further includes a generally horizontally extending, third conveyor means for feeding tubers towards said mouth of the conveying passage. Said third conveyor means may be integral with said second conveyor means, so that the elevator system consists of only two conveyor units, one of which has a substantially vertical portion and a substantially horizontal portion. Alternatively, said third conveyor may be a separate endless belt driven by drive means and disposed substantially adjacent to a lower end of the second conveyor means, proximal to the mouth of the conveying passage.

Said endless belts of said first and second conveyor means, and preferably also said third conveyor means (where provided) , each comprise a so-called "pintle" belt, such belts being generally known in the agricultural field. Each said pintle belt has a conveying surface made up of a multiplicity of flexible, generally close-packed, evenly spaced, resilient fingers projecting from and covering the belt, commonly arranged in rows spaced approximately 0.5 inches (12.7mm) apart. This gives the appearance of a brush-like surface. Pintle belts are commonly made of rubber, or synthetic rubber materials. Use of pintle belts as the conveyor belts in said first and second conveyor means of the elevator system of the present invention is particularly advantageous as they provide excellent support to the individual tubers being carried upwardly in the conveying passage. The resilient fingers of the opposing belts defining the conveying passage therebetween gently engage, grip and support the tubers, so that the tubers do not move around, roll and knock against each other as they are lifted upwardly by the conveyor as happens in the prior art bucket-type conveyors. Damage to the tubers in the elevator system is thus minimised or substantially avoided.

Where said first, second and third conveyor means are separate conveyor means, the lower end of said second conveyor means may extend beyond the lower end of said first conveyor means, and one end portion of said third conveyor means is preferably disposed substantially below and adjacent to said lower end of the second conveyor means, whereby tubers on said third conveyor means being fed towards the mouth of the conveying passage tend to build up at the mouth thereof, against the lower end portion of the second conveyor means, where they are engaged by the counter-rotating endless belts of the first and second conveyor means so as to be lifted into the conveying passage defined therebetween. The spacing of the lower end of the first conveyor means from the third conveyor means may be advantageously chosen so that tubers having at least a predetermined, minimum average diameter tend to be engaged in this manner by the first and second conveyor means, at the mouth of the conveying channel.

Optionally, the elevator system may include roller means, conveniently driven by motor or other drive means, and disposed directly above said third conveyor means and in proximity to the mouth of the conveying passage, whereby tubers on said third conveyor means being fed towards said mouth of the conveying passage encounter or gently collide with said roller means and are assisted generally upwardly by said roller means into the mouth of the conveying passage. This arrangement is advantageous in ensuring that tubers having an average diameter below said afore-mentioned predetermined, minimum average diameter are assisted upwardly into the mouth of the conveying passage.

In a further possible embodiment, where each of said first, second and third conveyor means comprises an endless pintle belt as afore-described, the lower ends of both said first and second conveyor means may each be disposed sufficiently close to said end portion of the third conveyor means that the pintle belt fingers of the first and second conveyor means touch the pintle belt fingers of said third conveyor means disposed therebelow.

In any of the above-described embodiments, said end portion of the third conveyor means and said lower end of the second conveyor means may conveniently define therebetween a waste ejection exit via which loose dirt, stones or other debris accompanying the tubers is ejected from the elevator system. Said third conveyor means is advantageously disposed sufficiently close to said lower end of the second conveyor means to substantially prevent tubers of said predetermined minimum average diameter from exiting the elevator system via said waste ejection exit. This may be conveniently achieved where said third conveyor means comprises a pintle belt, as afore-described, and the resilient fingers of the pintle belt of the third conveyor means are in close, touching engagement with the fingers of the pintle belt of the lower end of the second conveyor, whereby dirt, small stones and other small loose debris tends to fall down between the fingers of the pintle belt of the third conveyor means and be conveyed under the second conveyor means, out of the waste ejection exit, while tubers of at least said predetermined minimum diameter, sitting generally on top of the fingers of the pintle belt, are prevented by the lower end of the second conveyor means from being ejected from the elevator system.

An advantage of this particular elevator system is that dirt, stones, mud or other debris mixed with the tubers being conveyed towards the mouth of the conveying channel are expelled from the elevator system via the waste exit passageway, thus preventing these from building up in the mouth of the conveying passage and blocking the mouth. Furthermore, as the tubers are conveyed upwardly in the conveying passage, dirt, mud or stones which are dislodged from the tubers as they are conveyed upwardly tends to fall back down the conveying passage to the mouth thereof, from where it too will be transported through the waste ejection exit and out of the elevator system.

As well as tending to prevent blockage of the conveying channel, a further advantage where the elevator is used to convey tubers directly from the harvester into a hopper or trailer, is that by expelling excess dirt, stones etc. from the elevator system (via the waste exit passageway) the amount of such material which is transferred with the harvested crop into the hopper or trailer used to transport the tubers/crop back to a storage or packing area is minimised, thus providing increased efficiency in the harvesting process and a greater percentage of tubers per unit weight in the crop as stored or packed etc.

Advantageously, said first and second conveyor means are formed and arranged so that the conveying channel defined therebetween incorporates at least one bend therein for imparting a change of direction to the tubers conveyed therein. The first and second conveyor means of the elevator system may, for example, comprise a lower, substantially vertical section in which the conveying channel extends substantially vertically upwardly, and an upper substantially horizontal section in which the conveying channel extends substantially horizontally. Such a construction enables tubers to be lifted upwardly, for example, from a lower region in a harvester and conveyed across towards a trailer travelling alongside the harvester, the tubers leaving the upper end of the elevator being dropped into the trailer located therebelow. The first and second conveyors may be formed and arranged such that the conveying channel incorporates two or more bends therein so that the tubers follow a more or less arcuate path along at least a part of their path as they are conveyed upwardly from one level to another level by the elevator system.

A further advantage of this type of elevator over the previously used "bucket-type" elevators is that a much more compact elevator structure is achieved with the elevator of the present invention. As afore-mentioned, the elevator need not extend from the mobile agricultural machinery to which it is attached, at a forty-five degree angle as was common in the prior art bucket-type elevators and which led to the inherent instability of the prior art structures. Moreover, where the machinery is a harvester on wheels, the need to make the wheels of different sizes on opposite sides of the chassis is avoided since the tubers are fed straight into the mouth of the conveying passage without the need to have the lower end of the elevator positioned below the infeed conveyor to catch tubers dropped thereinto as required in the prior art bucket-style conveyors.

Optionally, a lower end portion of the second conveyor means may be pivotally connected to an upper portion of the second conveyor means, thereby enabling the lower end portion of the second conveyor means to be pivoted away from the lower end portion of the first conveyor means. This may be desirable where the operator wishes to allow harvested tubers to pass straight through the harvester without being picked up into the elevator.

Each of the first and second conveyor means may comprise at least two pivotally connected conveyor portions formed and arranged so as to enable the direction of the elevator system to be changed.

The mobile agricultural machinery according to the present invention may be a harvester. The harvester may also incorporate grading and/or sorting means. The harvester may conveniently also include a tuber cleaning unit for removing excess dirt, loose matter etc. from the directly harvested crop, from which cleaning unit the crop is preferably passed onto the elevator system. The elevator preferably extends between said tuber cleaning unit and a hopper or trailer travelling parallel to the harvester, in use thereof. The first and second conveyor means are preferably formed and arranged so that the upper end of the conveying passage may be disposed above the hopper or trailer so that tubers leaving the elevator system upper end are dropped into the hopper or trailer. The first and second conveyor means may be formed and arranged so as to extend down into the hopper or trailer so as to reduce the height through which the tubers fall when they are dropped thereinto.

Alternatively, the upper end of the elevator system may be arranged so as to feed the tubers onto a sorting table incorporated in the harvester, or even to feed the tubers onto a further conveyor means (disposed at a higher level than the cleaning arrangement) for conveying the tubers to another location in the harvester.

Advantageously, the first and second conveyor means each comprise a supporting frame or panels made of a strong, substantially rigid material, which is preferably stainless steel, for supporting said endless belts in position.

Preferred embodiments of the invention will now be described, by way of example only, with reference to the accompanying drawings in which:
Fig.1 is a perspective end view of a harvester incorporating a prior art type of elevator, with a trailer travelling therealongside;
Fig.2 is a schematic see-through side elevation of a harvester according to the invention showing the inner workings of the harvester, including an improved elevator system;
Fig.3 is an enlarged side elevation of the ringed portion A of the elevator system of the harvester of Fig.2;
Fig.4 is a detailed side view of a substantially vertical portion of the elevator system of the harvester of Fig.2, showing potatoes being conveyed upwardly therein;
Fig.5 is an enlarged side elevation of a portion of an alternative elevator system of the invention to that shown in Fig.3;
Fig.6 is an enlarged side elevation of a portion of another alternative elevator system of the invention to that of Fig.3;
Fig.7 is a schematic end view of another harvester according to the invention, with a trailer travelling therealongside;
Fig.8 illustrates a modified rear portion of the harvester of Fig.2;
Fig.9 is a detail view of the portion B of the harvester of Fig.8; and
Fig.10 illustrates a pivoting elevator arrangement for a harvester according to one possible embodiment of the invention.

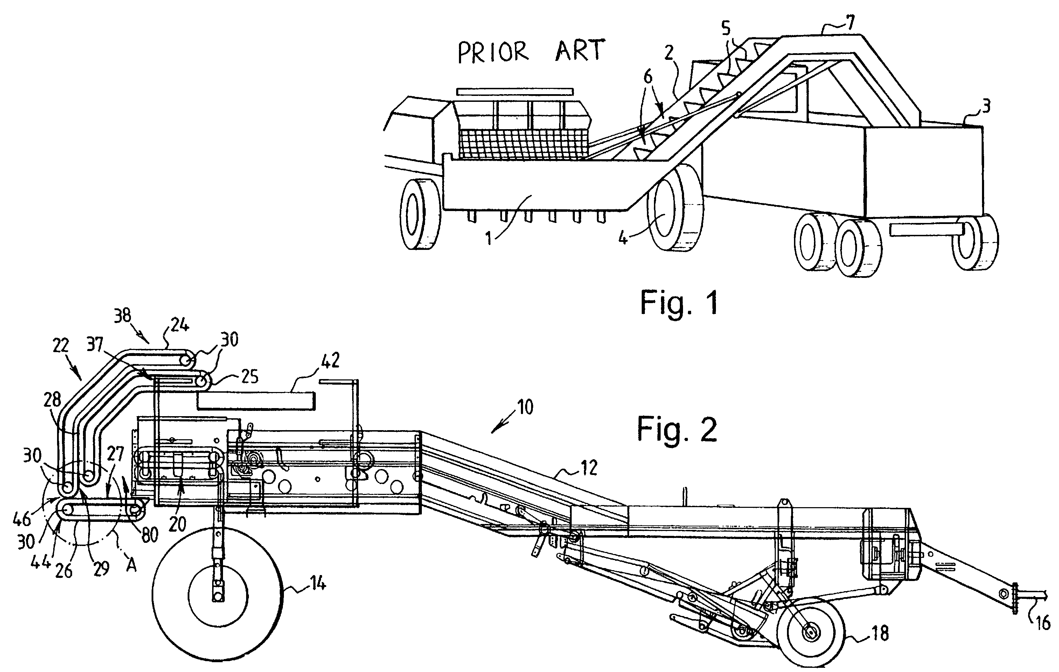

Fig. 1 shows a conventional potato harvester 1 having an elevator 2 for lifting the potatoes from an exit end of the harvester up and into a trailer 3 pulled by a tractor 4 travelling alongside the harvester during harvesting. Harvested potatoes, having been conveyed through any grading, sorting and/or cleaning stations (not shown) which may be provided in the harvester itself, are allowed to travel downwardly, or drop, onto a lower end of the elevator attached or otherwise built into the harvester so as to catch the falling potatoes. The potatoes are conveyed upwardly in the elevator, in so-called "buckets" 6 defined by flaps, fins or paddles 5 evenly spaced along, and projecting from, an endless conveyor belt of the elevator 2, to the peak or summit 7 in the generally arched elevator structure and downwardly to the free end of the elevator where they drop (as the endless belt rotates around the rollers or other drive means driving the belt) into the trailer 3 disposed thereunder.

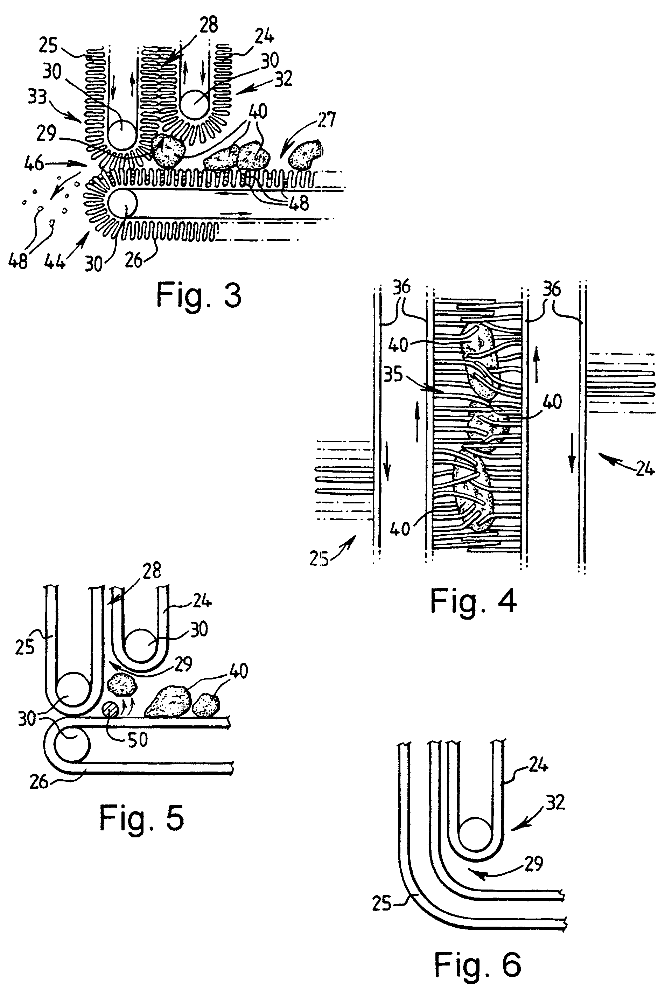

Fig.2 shows a harvester 10 according to a first embodiment of the invention. The harvester comprises a chassis 12 mounted on a pair of wheels 14 at a rear portion of the chassis, for traversing ground. The chassis 12 has a tow bar 16 at its front end by means of which the harvester is pulled behind a vehicle such as a tractor (not shown), during harvesting operations. (In other possible embodiments the harvester is self-driven or may be joined by a 3-point link to another vehicle or driving machinery.) Root crop harvesting shares 18, in this case designed for potato harvesting, are suspended from a front portion of the chassis 12. The harvested potatoes are carried up from the shares by an open web conveyor (not visible in Fig.2) which conveys the potatoes into the main body of the harvester where they may be subjected to various, separating, cleaning, and/or grading operations. In the harvester of Fig.2, the potatoes are conveyed through a cleaning unit 20 which removes excess dirt from the potatoes. Potatoes exiting the cleaning unit roll or tumble downwards onto a substantially horizontal conveyor 26 which forms part of a novel elevator 22 of the harvester 1. The elevator further includes two generally upwardly extending conveyors 24,25 which are opposed face-to-face so as to define a channel or passage 28 therebetween for conveying potatoes generally upwardly. The three conveyors 24,25,26 each comprise an endless belt driven by respective motor driven drive means 30, in the form of cogs or rollers. The two upwardly extending conveyors (hereinafter referred to as the "first" 24 and "second" 25 conveyors) are driven in counter-rotating directions so that their opposing surfaces travel upwardly in the same direction. The horizontal conveyor (hereinafter referred to as the "third" 26 conveyor) is driven so that its upper surface 27 travels forwardly, away from the cleaning unit 20 and towards the lower ends 32,33 of the first and second conveyors 24,25. This is indicated more clearly in Fig.3 which is a magnified view of the ringed portion A of Fig.2. The widths of the conveying surfaces of each of the two upwardly extending conveyors 24,25 and the horizontal conveyor 26 are substantialy equal, and are also each approximately equal to the overall width of the harvester 10.

As shown in Fig.3, each of the conveyors 24,25,26 comprises an endless so-called "pintle" belt. Each belt is made of rubber (or synthetic rubber material) and has a multiplicity of resiliently deformable, flexible projections or fingers 35 extending outwardly from the main body 36 of the belt. This is indicated schematically in Fig.3 and is shown in more detail in Fig.4 which shows potatoes being conveyed upwardly between the first and second conveyors 24,25. (In the interests of clarity, the flexible fingers 35 have not been specifically shown in Fig.2.) Each pintle belt is moulded from rubber, with approximately 6000 equally spaced apart resilient fingers/m². Each endless belt and its respective drive means is mounted in supporting framework made of steel frames or panels which are mounted to the chassis 12 of the harvester. (These frames or panels have been cut away in the side view of Fig.2 in order to clearly show the elevator structure.) As shown in Fig.4, the first and second conveyors 24,25 are generally disposed so that the flexible fingers 35 of the opposing surfaces thereof are in touching relationship.

As shown in Fig.2, the lower ends 32,33 of the first and second conveyors 24,25 define a mouth 29 of the conveying passage, and extend substantially vertically upwards therefrom, for approximately one third of the length of the conveyors 24,25, and then bend at an angle to the vertical, towards the main body of the chassis, extending at this angle for approximately a further third of their lengths, then bending again so that the final, upper end portions 37,38 of the length of each conveyor extend substantially horizontally. As shown in Figs.2 and 3, the lower end 33 of the second conveyor 25 extends down a little way beyond the lower end 32 of the first conveyor, with the third conveyor 26 being disposed so as to be substantially perpendicular to the lower ends 32,33 of the first and second conveyors and immediately adjacent to the lower end 33 of the second conveyor 25, the resilient fingers 35 of the pintle belts of the second and third conveyors being in touching relationship.

In use, harvested potatoes 40 (or other tubers being harvested) are conveyed on the third conveyor means 26 towards the mouth 29 of the conveying passage 28. Generally, as the tubers reach the mouth 29 they make contact with the overhanging end 33 of the second conveyor means 25 which tends to hold the tubers in this position until they are engaged between the flexible fingers of the first and second conveyors 24,25 which feed them upwardly into the conveying passage 28. Fig. 4 illustrates in detail a portion of the lower, substantially vertical section of the elevator 22 showing potatoes 40 being conveyed upwardly, gently gripped and supported in the conveying passage 28 defined between the belts of the first and second conveyors means 24,25, or, more specifically, defined by the opposing flexible fingers of these belts. As shown in Fig.4, the flexible fingers 35 of the opposing belts bend to accommodate and fit round the contours of each potato, each potato being separately gripped and supported while it is conveyed upwardly, the potatoes thus being unable to move around or collide with one another. The elevator 2 continuously conveys the potatoes through the generally curvilinear path of the conveying passage 28, until they reach the upper ends 37,38 of the conveyors 24,25 where they exit therefrom onto a sorting table 42 positioned at an upper level in the harvester 1, above the lower level of the cleaning unit 20.

As illustrated in Fig.3, the outer end 44 of the third conveyor 26 and the lower end 33 of the second conveyor 25 together define a waste ejection exit 46 via which loose dirt, stones or other small unwanted debris 48 may be ejected from the elevator. Such loose dirt etc., tends to settle down between the flexible fingers 35 of the third conveyor means 26 as the harvested potatoes are conveyed therealong, while the potatoes 40 generally sit on top of the fingers 35, as shown. On reaching the outer end 44 of the third conveyor, the dirt etc. tends to be carried along, under the lower end 33 of the second conveyor 33 (defining the waste ejection exit 46 with the outer end 44 of the third conveyor 26) from where it falls from the third conveyor as the belt thereof turns around the belt drive means 30. Moreover, dirt and loose debris coming off the potatoes which are carried up in the conveying passage 28 tends to fall down the conveying passage, between the flexible fingers 35, until it reaches the mouth 29 of the conveying passage, from where it too is carried out the waste ejection exit 46 by the third conveyor means 26.

It will be appreciated that not all the potatoes will be of an identical size, and that some will be considerably larger than others. Particularly tiny potatoes may tend to be expelled from the conveyor, through the waste ejection exit. The height of the end 32 of the first conveyor 24 above the third conveyor 26 is designed to allow all sizes of harvested tubers to pass freely thereunder, towards the mouth 29 of the conveying passage 28. Generally, the pintle belt fingers 35 of the first and third conveyors 24,26 in the embodiment of Fig.3 will not be in touching engagement. In practice, the gap or spacing between the (opposing fingers of the) first and third conveyors 24,26 is arranged to be substantially equal to a predetermined, minimum average tuber diameter in order that all tubers having an average diameter of at least said predetermined minimum average diameter will tend to be engaged between the ends 32,33 of the first and second conveyors and thus be fed/lifted up into the conveying passage 28. In some cases though, the this gap may be larger or smaller. Potatoes having average diameters below said predetermined minimum average diameter may not always be lifted into the conveying passage. This problem is sought to be solved by the improved embodiment of the elevator shown (in part) in Fig.5 (for clarity the flexible fingers 35 of the pintle belts 24,25,26 have not been shown). In this embodiment, a roller 50 is disposed just above surface of the third conveyor 26, proximal to the lower end 33 of the second conveyor 25, and just below the mouth 29 of the conveying passage 28. The roller 50 is driven anti-clockwise (as seen in Fig.5) by drive means (not shown) and acts to assist smaller potatoes/tubers into the mouth 29 of the conveying passage 28 by boosting such potatoes upwardly when they make contact with the roller 50, either by the potatoes merely rolling up over the surface of the roller so that they are more easily picked up by the flexible fingers 35 at the mouth of the conveying passage 28, or by physically propelling them upwardly a short way into the conveying passage (as indicated by the arrows in Fig.5). The larger potatoes continue to be engaged by the flexible fingers generally without being propelled upwards by the roller 50, although they may also be assisted upwardly to some extent thereby.

The roller 50 is preferably formed and arranged to allow dirt and other relatively small loose debris to pass therebelow, between the roller means and the surface of the pintle belt of the third conveyor means 26, from where it is carried out of the waste ejection exit 46. The distance of the roller means from the surface of the third conveyor means may be adjusted, automatically or manually, to increase or decrease it so as to control the size and amount of dirt, stones and other debris which may pass to the waste ejection exit.

In another possible embodiment (not shown) the lower ends 32,33 of the first and second conveyors 24,25 may be level with each other and disposed sufficiently close to the third conveyor 26 (disposed therebelow) that the flexible fingers 35 of the pintle belts of the first and second conveyors touch the fingers 35 of the third conveyor 26. In this embodiment all potatoes fed towards the mouth 29 of the conveying passage 28 by the third conveyor 26 pass under the lower end 32 of the first conveyor 24, between the first conveyor 24 and the third conveyor 26, (the flexible fingers 35 bending and deforming around the potatoes) and are lifted up into the conveying passage 29. (It should be noted that the fact that the second conveyor 25 is rotating in a different direction to the first conveyor 24 tends to prevent the potatoes from passing through the waste ejection exit 46.) In this embodiment, all potatoes, of all different sizes, tend to be lifted easily into the conveying passage at the mouth 29 thereof. Nevertheless, it will be appreciated that particularly large potatoes may tend to be squashed or damaged as they pass between the first and third conveyors and/or may tend to get jammed therein and/or build up in front of the first conveyor 24 and for these reasons, where a crop of widely varying tuber sizes is to be handled, the elevator illustrated in Figs.3 and 5, where the lower end 32 of the first conveyor is spaced some way above the third conveyor, may be more appropriate.

In the latter described embodiment, the second conveyor 25 may be disposed even closer to the third conveyor 26 than the first conveyor 24, so that the flexible fingers 35 of the second conveyor are more deeply intermingled with those of the third conveyor 26. In a further possible embodiment, positions of the first and second conveyors 24,25, or at least the lower ends 32,33 thereof, may be adjustable so as to enable them to be disposed closer to, or farther away from, the third conveyor 26, as desired e.g. depending on the nature of crop to be harvested.

Fig.6 shows a portion of an alternative embodiment of the elevator 22 in which the elevator comprises only two pintle belt conveyors, 24,25 (again, for clarity the flexible fingers 35 have not been shown). In this case, the second conveyor extends generally vertically downwardly a short way below the lower end 32 of the first conveyor 24 and bends substantially perpendicularly to itself to provide a substantially horizontal infeed conveying portion, which performs the function of the third conveyor 26 of the embodiment of Figs.2,3 and 5. In use, the potatoes are conveyed along the horizontal portion of the second conveyor 25 and are conveyed in a continuous movement into the mouth 29 of the conveying passage 28 defined between the two conveyors. In this embodiment all sizes of potatoes are conveyed into the mouth of the conveying passage, although some of the smaller potatoes may build up temporarily at the mouth of the conveyor before they are carried thereinto.

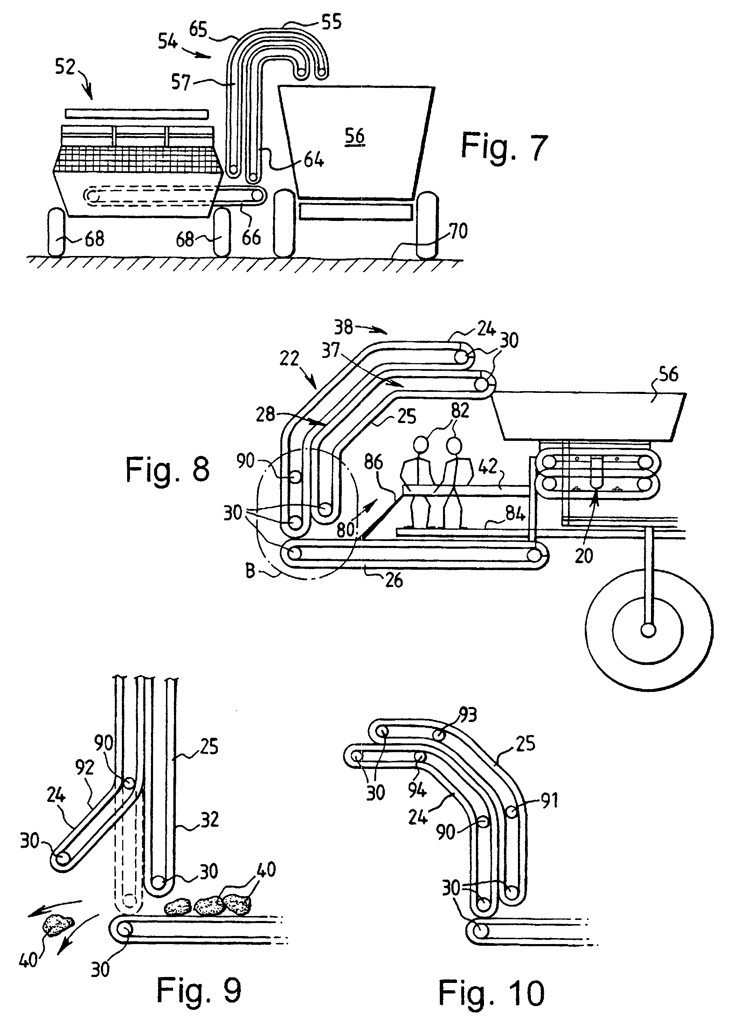

Fig.7 is an end view of a harvester 52 according to another embodiment of the invention, with an elevator 54 similar to that of the Fig.2 embodiment, but which in this case has an upper portion 55 which extends outwardly from the side of the harvester, so as to be disposed over a trailer or hopper 56 travelling alongside the harvester, in use thereof, for catching the harvested potatoes/tubers. The elevator 54 comprises three conveyors 64,65,66 similar to the three conveyors of the Fig.2 embodiment, but with the conveying surface of the third, horizontal conveyor 66 in this case being driven so as to travel outwardly towards the side of the harvester (rather than rearwardly out of the rear end of the harvester, as in Fig.2).Potatoes/tubers roll or tumble onto this conveyor (having exited a cleaning unit in , , or other portion of, the harvester) and are transported out to the side of the harvester where they are picked up by the first and second conveyors 64,65 and conveyed vertically upwardly to the desired height (by a vertical section 57 of the elevator) and then conveyed in the horizontal elevator section towards the trailer 56. As shown in Fig.7, the upper ends of the first and second conveyors 64,65 may also bend vertically downwards a short distance, towards or down into the trailer 56, so as to minimise the fall or drop which the potatoes make into the trailer 56.

It will also be appreciated that, as shown in Fig.7, in the harvester of the invention the elevator 22, 52 can be easily accommodated above the pair of wheels 68 by means of which the harvester chassis traverses the ground 70, allowing both wheels 68 to be of the same size.

It will further be appreciated that various modifications to the described embodiments are possible without departing from the scope of the invention. For example, the third conveyor 26 need not always be a pintle belt, but could be a conventional flat-surfaced endless belt (although this may be less advantageous with respect to the waste ejection exit 46).

Moreover, there are numerous possible configurations and profiles for the first and second conveyors, or the upwardly extending portions thereof, incorporating one or more bends, slopes or other variations to provide a desired route of conveying passage for the tubers, although it will be appreciated that the elevator will always include at least one substantially vertically extending section, for example at the lower or "pick-up" end thereof, as this allows a relatively compact elevator structure to be achieved, and avoids the inherent instability of a harvester having a large, sloping elevator extending outwardly from a side thereof, as seen in the prior art bucket-type elevator structure.

It will be appreciated that while the illustrated embodiments each incorporate at least one vertically, or substantially vertically, extending elevator section the benefits of the invention can still be achieved to at least some extent where the elevator includes at least one generally vertically extending section, inclined at say 10, or even up to 20 degrees to the vertical.

Furthermore, while the above-described embodiments of the invention are potato harvesters, it will be appreciated that the invention is also applicable to machinery which may be designed for conveying other types of root crop than potatoes e.g. turnips, beets etc.. In this respect it will be understood that the chosen width of the conveying passage may need to be wider or narrower depending on the type of crop to be conveyed therein. In one possible embodiment of the invention the first and second conveyors 24,25 may therefore be movable, either manually or automatically, towards and away from one another to allow the conveying passage to be set at a desired width. Additionally, the configuration and/or spacing of the flexible fingers 35 of the pintle belts, particularly of the first and/or second conveyor 24,25, may be different depending on the type of crop for which the harvester is intended to be used. For example, pintle belts having more widely spaced apart fingers and/or longer fingers 35, which may have larger diameters, may be used where the elevator will be conveying generally larger size tubers (e.g. ware crops). Similarly, pintle belts having more closely spaced and/or shorter fingers 35, which may have smaller diameters, may be used for generally smaller size tubers (e.g. seed potatoes). The flexible fingers of the pintle belt of the first conveyor 24 may, in some possible embodiments, be longer/shorter than those of the second conveyor, and/or be more thinly/densely spaced.

With reference to the harvester shown in Fig.2, in which the picking table 42 is located adjacent the upper end 38 of the elevator 22, we also propose an alternative embodiment in which the picking table 42 is in fact located further "inside" the harvester itself. This arrangement is illustrated schematically in Fig.8, which is a detail of the rear end of the harvester. The picking table 42 is located in the free space 80 defined between the cleaning unit 20, the horizontal conveyor 26, and the elevator 22. It will be appreciated that in this embodiment, the two upwardly extending conveyors 24,25 of the elevator 22 are spaced sufficiently far back from the end of the cleaning unit 20 to allow enough space for the picking table 42 to be located therebetween, as shown in Fig.8. Workers/pickers 82 working at the picking table are able to stand inside the harvester, beside the picking table, on a platform 84. The upwardly extending conveyors 24,25 are configured so as to extend up and over the heads of the workers 82, thereby forming at least some shelter for the workers. Fabric sheeting (e.g. sacking cloth, or a plastics sheet material) may also be provided (e.g. hanging down from the sides of the elevator, or from safety guards provided at the sides thereof) to provide further shelter for the workers. The workers select potatoes to be conveyed up to a hopper 56 via the elevator 22. These potatoes are allowed to roll down a runway 86 onto the horizontal conveyor 26 which conveys them to the mouth of the elevator.

Fig.8 also illustrates another feature which may be provided in the elevator 22. This is the provision of a pivot point (or hinge arrangement) 90 in the outermost one 24 of the two upwardly extending conveyors. This pivot point enables a lower section 92 of the outermost conveyer 24 to be pivoted away from the lower end 32 of the innermost conveyer 25. This feature is useful if, for example, the harvester operator wants to allow potatoes to pass straight through the harvester, out the rear end thereof, without being lifted up into the elevator 22 and conveyed upwardly, as illustrated in Fig.9. This may be the case where, for example, the farmer wishes only some of the tubers to be picked up in the elevator during a first pass of the machinery, and the others to be harvested on a subsequent pass. This pivoting feature could, of course, be incorporated in the elevator shown in the harvester of Fig.2.

Fig.10 shows a further modification in which the elevator 22 of the harvester of Fig.2 is provided with an additional pivot point 94 at an upper end of the outermost conveyor 24 and the inner conveyor 25 is provided with two similar pivot points 91,93, so that each conveyor 24,25 can be pivoted in two places so as to change the direction of the elevator so that it extends rearwardly of the harvester, for example towards a trailer travelling close behind the harvester to receive potatoes from the upper end of the elevator 22. The harvester operator has the option of pivoting the conveyors 24,25 back to their original positions again, as shown in Fig.2, if he instead wishes the potatoes to go to, for example, a picking table 42 in the harvester.

## Claims

1. Mobile agricultural machinery (10) for use in the harvesting of root crops, said machinery (10) comprising a chassis (12) provided with ground traversing means (14), root crop harvesting means (18), and an elevator system (22) for conveying tubers (40) or the like upwardly from a first level to a second level, wherein the elevator system comprises first and second conveyor means (24,25) extending generally upwardly, being disposed in opposed relationship and comprising first and second endless belts respectively and drive means (30) therefor which drive said belts in counter-rotating directions so that opposed conveying surfaces of the belts are driven in a common direction so as to define therebetween a conveying passage (28) of substantially uniform thickness for conveying tubers (40) or the like upwardly from a first level to a second level, a lower end portion (32) of said first conveyor means (24), together with an opposed portion of said second conveyor means (25), defining a mouth (29) of the conveying passage (28), and said elevator system (22) having at least one generally vertically extending portion in which the tubers (40) are conveyed generally vertically upwards in said conveying passage (28), in use of the machinery (10), and **characterised in that** said first and second conveyor belts of each of said first and second conveyor means (24,25) are pintle belts providing a multiplicity of generally close-packed evenly spaced, flexible, resiliently deformable projections (35) formed and arranged for engaging, gripping and supporting the tubers (40) separately in the conveying passage so that the tubers do not move around, roll and knock against each other (28), in use of the machinery, with each tuber engaged by a multiplicity of said projections.

2. Mobile agricultural machinery (10) according to claim 1, wherein the resiliently deformable projections of the opposed conveying surfaces of said first and second conveying means are in intermeshing relationship with each other.

3. Mobile agricultural machinery (10) according to claim 1, wherein the resiliently deformable projections of the opposed conveying surfaces of said first and second conveying means are in touching relationship with each other.

4. Mobile agricultural machinery (10) according to any preceding claim, wherein said generally vertically extending portion of the elevator system (22) extends substantially vertically.

5. Mobile agricultural machinery (10) according to any of claims 1 to 3, wherein said at least one generally vertically extending portion of the elevator system (22) departs by up to 20° from the vertical.

6. Mobile agricultural machinery (10) according to any preceding claim, wherein each said pintle belt has a conveying surface made up of a multiplicity of flexible, generally close-packed, evenly spaced, resilient fingers (35) projecting from and covering the belt (24,25), arranged in rows spaced approximately 0.5 inches (12.7mm) apart.

7. Mobile agricultural machinery (10) according to any preceding claim, wherein the elevator system (22) further comprises a generally horizontally extending, third conveyor means (26) for feeding tubers (40) towards said mouth (29) of the conveying passage (28).

8. Mobile agricultural machinery (10) according to claim 7, wherein said third conveyor (26) means is integral with said second conveyor means (25), so that the elevator system (22) consists of only two conveyor units, one of which has a substantially vertical portion and a substantially horizontal portion.

9. Mobile agricultural machinery (10) according to claim 7, wherein said third conveyor means (26) is a separate endless belt driven by drive means (30) and disposed substantially adjacent to a lower end (33) of the second conveyor means (25), proximal to the mouth (29) of the conveying passage (28).

10. Mobile agricultural machinery (10) according to claim 9, wherein the lower end (33) of said second conveyor means (25)extends beyond the lower end (32) of said first conveyor means (24), and one end portion (44) of said third conveyor means (26) is disposed substantially below and adjacent to said lower end (33) of the second conveyor means (25).

11. Mobile agricultural machinery (10) according to claim 9 or claim 10, wherein the spacing of the lower end (32) of the first conveyor means (24) from the third conveyor means (26) is such that tubers (40) having at least a predetermined, minimum average diameter tend to be engaged, at the mouth (29) of the conveying channel (28), by the counter-rotating endless belts of the first and second conveyor means, so as to be lifted into the conveying passage (28) defined therebetween.

12. Mobile agricultural machinery (10) according to any of claims 7 to 11, wherein the elevator system (22) further includes roller means (50), driven by drive means, and disposed directly above said third conveyor means and in proximity to the mouth (29) of the conveying passage (28), whereby tubers (40) on said third conveyor means (26) being fed towards said mouth of the conveying passage, in use of the machinery, encounter or gently collide with said roller means (50) and are assisted generally upwardly by said roller means (50) into the mouth of the conveying passage.

13. Mobile agricultural machinery (10) according to claim 10, wherein said end portion (44) of the third conveyor means (26) and said lower end (33) of the second conveyor means (25) define therebetween a waste ejection exit (46) via which loose dirt, stones or other debris (48) is ejected from the elevator system (22).

14. Mobile agricultural machinery (10) according to claim 13, wherein said third conveyor means comprises a pintle belt and wherein the lower ends (32,33) of both said first and second conveyor means (24,25) are each disposed sufficiently close to said end portion (44) of the third conveyor means (26) that the pintle belt fingers (35) of the first and second conveyor (24,25) means touch the of pintle belt fingers (35) of said third conveyor means (26) disposed therebelow.

15. Mobile agricultural machinery (10) according to claim 13 or claim 14, wherein said third conveyor means (26) is disposed sufficiently close to said lower end (33) of the second conveyor means (25) to substantially prevent tubers (40) of a predetermined minimum average diameter from exiting the elevator system (22) via said waste ejection exit (46).

16. Mobile agricultural machinery (10) according to any preceding claim, wherein said first and second conveyor means (24,25) are formed and arranged so that the conveying channel (28) defined therebetween incorporates at least one bend therein for imparting a change of direction to the tubers (40) conveyed therein.

17. Mobile agricultural machinery (52) according to claim 16, wherein the elevator system (22) comprises a lower, substantially vertical section (57) in which the conveying channel extends substantially vertically upwardly, and an upper substantially horizontal section in which the conveying channel (28) extends substantially horizontally.

18. Mobile agricultural machinery (10) according claim 16, wherein the first and second conveyors means (24,25) are formed and arranged such that the conveying channel (28) incorporates two or more bends therein so that the tubers (40) follow a more or less arcuate path along at least a parr of their path as they are conveyed upwardly from one level to another level by the elevator system (22).

19. Mobile agricultural machinery (10) according to any of claims 9,10,11,13,14,15,16,17 and 18, wherein a lower end portion (92) of the second conveyor means (25) is pivotally connected to an upper portion of the second conveyor means whereby said lower end portion (92) may be pivoted away from the lower end portion (32) of the first conveyor means (24).

20. Mobile agricultural machinery (10) according to any preceding claim, wherein said first and second conveyor means each comprise at least two pivotally connected conveyor portions formed and arranged so as to enable the direction of the elevator system(22) to be changed.

21. Mobile agricultural machinery (10) according to any preceding claim, wherein the mobile agricultural machinery is a harvester.

22. Mobile agricultural machinery (10) according to claim 1, wherein the mobile agricultural machinery is a potato harvester.

23. Mobile agricultural machinery (10) according to claim 21 or claim 22, wherein the harvester (52) further incorporates grading and/or sorting means.

24. Mobile agricultural machinery (10) according to any of claims 21 to 23, wherein the harvester also includes a tuber cleaning unit (20) located between the root crop harvesting means (18) and said elevator system (22).

25. Mobile agricultural machinery (10) according to claim 1, wherein the thickness of the conveying passage between the opposed conveying surfaces of said first and second conveyor means is adjustable.

26. Mobile agricultural machinery (10) according to claim 7, wherein the positions of at least the lower ends of said first and second conveyor means relative to said third conveyor means are adjustable.

## Patentansprüche

1. Bewegliche Landmaschine (10) für einen Einsatz beim Ernten von Hackfrüchten, wobei die Maschine (10) ein Chassis (12) aufweist, das mit einer Bodenbewegungseinrichtung (14), einer Hackfruchtemteeinrichtung (18) und einem Fördersystem (22) fiir das Transportieren von Knollen (40) oder dergleichen nach oben von einem ersten Niveau auf ein zweites Niveau versehen ist, worin das Fördersystem eine erste und zweite Fördereinrichtung (24, 25) aufweist, die sich im allgemeinen nach oben erstrecken, wobei sie in einer gegenüberliegenden Beziehung angeordnet sind und erste und bzw. zweite Endlosbänder und eine Antriebseinrichtung (30) dafür aufweisen, die die Bänder in gegenläufigen Richtungen antreibt, so daß die gegenüberliegenden Förderflächen der Bänder in einer gemeinsamen Richtung angetrieben werden, um so dazwischen einen Förderdurchgang (28) von im wesentlichen gleichmäßiger Dicke für das Transportieren von Knollen (40) oder dergleichen nach oben von einem ersten Niveau auf ein zweites Niveau zu definieren, wobei ein unterer Endabschnitt (32) der ersten Fördereinrichtung (24) zusammen mit einem gegenüberliegenden Abschnitt der zweiten Fördereinrichtung (25) eine Öffnung (29) des Förderdurchganges (28) definieren, und wobei das Fördersystem (22) mindestens einen im allgemeinen sich vertikal erstreckenden Abschnitt aufweist, in dem die Knollen (40) im allgemeinen vertikal nach oben im Förderdurchgang (28) befördert werden, wenn die Maschine (10) eingesetzt wird, und **dadurch gekennzeichnet, daß** das erste und zweite Förderband einer jeden der ersten und zweiten Fördereinrichtung (24, 25) Gelenkstiftbänder sind, die eine Vielzahl von im allgemeinen dicht gepackten, gleichmäßig beabstandeten, flexiblen, elastisch verformbaren Vorsprüngen (35) bereitstellen, die für ein Berühren, Erfassen und Tragen der Knollen (40) separat im Förderdurchgang (28) ausgebildet und angeordnet sind, so daß die Knollen nicht herumbewegt werden müssen und gegeneinander rollen und stoßen, wenn die Maschine im Einsatz ist, wobei jede Knolle mit einer Vielzahl von Vorsprüngen in Berührung gebracht wird.

2. Bewegliche Landmaschine (10) nach Anspruch 1, bei der die elastisch verformbaren Vorsprünge der gegenüberliegenden Förderflächen der ersten und zweiten Fördereinrichtung miteinander in einer ineinandergreifenden Beziehung sind.

3. Bewegliche Landmaschine (10) nach Anspruch 1, bei der die elastisch verformbaren Vorsprünge der gegenüberliegenden Förderflächen der ersten und zweiten Fördereinrichtung miteinander in einer berührenden Beziehung sind.

4. Bewegliche Landmaschine (10) nach vorhergehenden Ansprüchen, bei der sich der im allgemeinen vertikal erstreckende Abschnitt des Fördersystems (22) im wesentlichen vertikal erstreckt.

5. Bewegliche Landmaschine (10) nach einem der Ansprüche 1 bis 3, bei der der mindestens eine im allgemeinen sich vertikal erstreckende Abschnitt des Fördersystems (22) um bis zu 20° von der Vertikalen abweicht.

6. Bewegliche Landmaschine (10) nach vorhergehenden Ansprüchen, bei der ein jedes Gelnkstiftband eine Förderfläche aufweist, die aus einer Vielzahl von flexiblen, im allgemeinen dicht gepackten, gleichmäßig beabstandeten, elastischen Fingern (35) besteht, die aus dem Band (24, 25) herausragen und dieses bedecken, angeordnet in Reihen, die annähernd 0,5 in. (12,7 mm) voneinander beabstandet sind.

7. Bewegliche Landmaschine (10) nach vorhergehenden Ansprüchen, bei der das Fördersystem (22) außerdem eine sich im allgemeinen horizontal erstreckende dritte Fördereinrichtung (26) für das Zuführen von Knollen (40) in Richtung der Öffnung (29) des Förderdurchganges (28) aufweist.

8. Bewegliche Landmaschine (10) nach Anspruch 7, bei der die dritte Fördereinrichtung (26) mit der zweiten Fördereinrichtung (25) zusammenhängend ist, so daß das Fördersystem (22) aus nur zwei Fördereinheiten besteht, von denen eine einen im wesentlichen vertikalen Abschnitt und einen im wesentlichen horizontalen Abschnitt aufweist.

9. Bewegliche Landmaschine (10) nach Anspruch 7, bei der die dritte Fördereinrichtung (26) ein separates Endlosband ist, das mittels einer Antriebseinrichtung (30) angetrieben wird, und das im wesentlichen angrenzend an ein unteres Ende (33) der zweiten Fördereinrichtung (25) in unmittelbarer Nähe der Öffnung (29) des Förderdurchganges (28) angeordnet ist.

10. Bewegliche Landmaschine (10) nach Anspruch 9, bei der sich das untere Ende (33) der zweiten Fördereinrichtung (25) über das untere Ende (32) der ersten Fördereinrichtung (24) hinaus erstreckt, und ein Endabschnitt (44) der dritten Fördereinrichtung (26) im wesentlichen unterhalb des und angrenzend an das untere Ende (33) der zweiten Fördereinrichtung (25) angeordnet ist.

11. Bewegliche Landmaschine (10) nach Anspruch 9 oder Anspruch 10, bei der der Abstand des unteren Endes (32) der ersten Fördereinrichtung (24) von der dritten Fördereinrichtung (26) so ist, daß Knollen (40) mit mindestens einem vorgegebenen mittleren Mindestdurchmesser dazu neigen, in der Öffnung (29) des Förderkanals (28) von den gegenläufigen Endlosbändern der ersten und zweiten Fördereinrichtung berührt zu werden, um so in den dazwischen definierten Förderdurchgang (28) angehoben zu werden.

12. Bewegliche Landmaschine (10) nach einem der Ansprüche 7 bis 11, bei der das Fördersystem (22) außerdem eine Walzeneinrichtung (50) umfaßt, die durch eine Antriebseinrichtung angetrieben wird, und die direkt über der dritten Fördereinrichtung und in unmittelbarer Nähe der Öffnung (29) des Förderdurchganges (28) angeordnet ist, wodurch die Knollen (40) auf der dritten Fördereinrichtung (26), die beim Einsatz der Maschine in Richtung der Öffnung des Förderdurchganges zugeführt werden, der Walzeneinrichtung (50) begegnen oder leicht damit kollidieren und im allgemeinen nach oben von der Rolleneinrichtung (50) in die Öffnung des Förderdurchganges hinein unterstützt werden.

13. Bewegliche Landmaschine (10) nach Anspruch 10, bei der der Endabschnitt (44) der dritten Fördereinrichtung (26) und das untere Ende (33) der zweiten Fördereinrichtung (25) dazwischen einen Abfallausstoßausgang (46) definieren, mittels dessen loser Erdboden, Steine oder anderes Geröll (48) aus dem Fördersystem (22) ausgestoßen werden.

14. Bewegliche Landmaschine (10) nach Anspruch 13, bei der die dritte Fördereinrichtung ein Gelenkstiftband aufweist, und bei der die unteren Enden (32, 33) von sowohl der ersten als auch der zweiten Fördereinrichtung (24, 25) jeweils ausreichend nahe am Endabschnitt (44) der dritten Fördereinrichtung (26) angeordnet sind, damit die Gelenkstiftbandfinger (35) der ersten und zweiten Fördereinrichtung (24, 25) die Gelenkstiftbandfinger (35) der darunter angeordneten dritten Fördereinrichtung (26) berühren.

15. Bewegliche Landmaschine (10) nach Anspruch 13 oder Anspruch 14, bei der die dritte Fördereinrichtung (26) ausreichend nahe am unteren Ende (33) der zweiten Fördereinrichtung (25) angeordnet ist, um im wesentlichen zu verhindern, daß Knollen (40) mit einem vorgegebenen mittleren Mindestdurchmesser aus dem Fördersystem (22) mittels des Abfallausstoßausganges (46) austreten.

16. Bewegliche Landmaschine (10) nach vorhergehenden Ansprüchen, bei der die erste und zweite Fördereinrichtung (24, 25) so ausgebildet und angeordnet sind, daß der dazwischen definierte Förderkanal (28) mindestens eine Biegung darin enthält, um den darin beförderten Knollen (40) eine Richtungsänderung zu erteilen.

17. Bewegliche Landmaschine (52) nach Anspruch 16, bei der das Fördersystem (22) einen unteren, im wesentlichen vertikalen Abschnitt (57), in dem sich der Förderkanal im wesentlichen vertikal nach oben erstreckt, und einen oberen, im wesentlichen horizontalen Abschnitt aufweist, in dem sich der Förderkanal (28) im wesentlichen horizontal erstreckt.

18. Bewegliche Landmaschine (10) nach Anspruch 16, bei der die erste und zweite Fördereinrichtung (24, 25) so ausgebildet und angeordnet sind, daß der Förderkanal (28) darin zwei oder mehr Biegungen enthält, so daß die Knollen (40) einem mehr oder weniger bogenförmigen Weg längs mindestens eines Teils ihres Weges folgen, während sie von einem Niveau zu einem anderen Niveau mittels des Fördersystems (22) nach oben befördert werden.

19. Bewegliche Landmaschine (10) nach einem der Ansprüche 9, 10, 11, 13, 14, 15, 16, 17 und 18, bei der ein unterer Endabschnitt (92) der zweiten Fördereinrichtung (25) drehbar mit einem oberen Abschnitt der zweiten Fördereinrichtung verbunden ist, wodurch der untere Endabschnitt (92) vom unteren Endabschnitt (32) der ersten Fördereinrichtung (24) weggedreht werden kann.

20. Bewegliche Landmaschine (10) nach vorhergehenden Ansprüchen, bei der die erste und zweite Fördereinrichtung jeweils mindestens zwei drehbar verbundene Förderabschnitte aufweisen, die so ausgebildet und angeordnet sind, daß sie die Veränderung der Richtung des Fördersystems (22) ermöglichen.

21. Bewegliche Landmaschine (10) nach vorhergehenden Ansprüchen, bei der die bewegliche Landmaschine eine Erntemaschine ist.

22. Bewegliche Landmaschine (10) nach Anspruch 1, bei der die bewegliche Landmaschine eine Kartoffelerntemaschine ist.

23. Bewegliche Landmaschine (10) nach Anspruch 21 oder Anspruch 22, bei der die Erntemaschine (52) außerdem eine Trenn- und/oder Sortiereinrichtung enthält.

24. Bewegliche Landmaschine (10) nach einem der Ansprüche 21 bis 23, bei der die Erntemaschine ebenfalls eine Knollenreinigungsanlage (20) umfaßt, die zwischen der Hackfruchternteeinrichtung (18) und dem Fördersystem (22) angeordnet ist.

25. Bewegliche Landmaschine (10) nach Anspruch 1, bei der die Dicke des Förderdurchganges zwischen den gegenüberliegenden Förderflächen der ersten und zweiten Fördereinrichtung regulierbar ist.

26. Bewegliche Landmaschine (10) nach Anspruch 7, bei der die Positionen von mindestens den unteren Enden der ersten und zweiten Fördereinrichtung relativ zur dritten Fördereinrichtung regulierbar sind.

## Revendications

1. Machine agricole mobile (10) destinée à la récolte de plantes racines, ladite machine (10) comprenant un châssis (12) comprenant un moyen de traversée de la terre (14), un moyen de récolte des plantes racines (18) et un système élévateur (22) pour transporter des tubercules (40) ou des produits similaires vers le haut, d'un premier niveau à un deuxième niveau, le système élévateur comprenant des premier et deuxième moyens de transport (24, 25) s'étendant en général vers le haut, agencés en des points opposés et comprenant respectivement des première et deuxième courroies sans fin et un moyen d'entraînement correspondant (30, entraînant lesdites courroies dans des directions à contre-rotation, de sorte que les surfaces de transport opposées des courroies sont entraînées dans une direction commune, définissant ainsi un passage de transport entre elles (28), ayant une épaisseur pratiquement uniforme pour le transport de tubercules (40) ou de produits similaires vers le haut, d'un premier niveau à un deuxième niveau, une partie d'extrémité inférieure (32) dudit premier moyen de transport (24) définissant ensemble avec une partie opposée dudit deuxième moyen de transport (25) une embouchure (29) du passage de transport (28), ledit système élévateur (22) comportant au moins une partie à extension généralement verticale, dans laquelle les tubercules (40) sont transportés en général verticalement vers le haut dans ledit passage de transport (28), lors du service de la machine (10), et **caractérisée en ce que** lesdites premières et deuxième courroies de transport de chacun desdits premier et deuxième moyens de transport (24, 25) sont des courroies à pivot comportant de multiples saillies, généralement serrées espacées de manière égale, flexibles et à déformation élastique (35) formées et destinées à s'engager dans les tubercules (40), à saisir et à supporter ceux-ci séparément dans le passage de transport, de sorte à empêcher un déplacement, un roulement et un heurt des tubercules lors du service de la machine, chaque tubercule étant engagé par une multiplicité desdites saillies.

2. Machine agricole mobile (10) selon la revendication 1, dans laquelle les saillies à déformation élastique des surfaces de transport opposées desdits premier et deuxième moyens de transport sont engrenées l'une dans l'autre.

3. Machine agricole mobile (10) selon la revendication 1, dans laquelle les saillies à déformation élastique des surfaces de transport opposées desdits premier et deuxième moyens de transport se touchent mutuellement.

4. Machine agricole mobile (10) selon l'une quelconque des revendications précédentes, dans laquelle ladite partie à extension généralement verticale du système élévateur (22) s'étend de manière pratiquement verticale.

5. Machine agricole mobile (10) selon l'une quelconque des revendications 1 à 3, dans laquelle la au moins une partie à extension généralement verticale du système élévateur (22) s'étend à partir de la verticale à un angle de 20°.

6. Machine agricole mobile (10) selon l'une quelconque des revendications précédentes, dans laquelle chaque dite courroie à pivot comporte une surface de transport composée de multiples doigts élastiques flexibles, généralement serrés et à espacement égal (35), débordant de la courroie (24, 25) et recouvrant celle-ci, agencés dans des rangées espacées d'environ 0,5 pouce (12,7 mm).

7. Machine agricole mobile (10) selon l'une quelconque des revendications précédentes, dans laquelle le système élévateur (22) comprend en outre un troisième moyen de transport à extension généralement horizontale (26) pour amener les tubercules (40) vers ladite embouchure (29) du passage de transport (28).

8. Machine agricole mobile (10) selon la revendication 7, dans laquelle ledit troisième moyen de transport (26) fait partie intégrante dudit deuxième moyen de transport (25), de sorte que le système élévateur (22) comprend uniquement deux unités de transport, dont l'une comporte une partie pratiquement verticale et une partie pratiquement horizontale.

9. Machine agricole mobile (10) selon la revendication 7, dans laquelle ledit troisième moyen de transport (26) est constitué par une courroie sans fin séparée entraînée par un moyen d'entraînement (30) et agencée de manière pratiquement adjacente à une extrémité inférieure (33) du deuxième moyen de transport (25), de manière proximale à l'embouchure (29) du passage de transport (28).

10. Machine agricole mobile (10) selon la revendication 9, dans laquelle l'extrémité inférieure (33) dudit deuxième moyen de transport (25) s'étend au-delà de l'extrémité inférieure (32) dudit premier moyen de transport (24), une partie d'extrémité (44) dudit troisième moyen de transport (26) étant agencée pratiquement au-dessous et près de ladite extrémité inférieure (33) du deuxième moyen de transport (25).

11. Machine agricole mobile (10) selon les revendications 9 ou 10, dans laquelle l'extrémité inférieure (32) du premier moyen de transport (24) est espacée du troisième moyen de transport (26) de sorte que les tubercules (40) ayant au moins un diamètre moyen minimal prédéterminé tendent à être engagés, au niveau de l'embouchure (29) du canal de transport (28), dans les courroies sans fin à contre-rotation des premier et deuxième moyens de transport, afin d'être soulevés dans le passage de transport (28) défini entre elles.

12. Machine agricole mobile (10) selon l'une quelconque des revendications 7 à 11, dans laquelle le système élévateur (22) englobe en outre un moyen de rouleau (50), entraîné par un moyen d'entraînement et agencé directement au-dessus dudit troisième moyen de transport et à proximité de l'embouchure (29) du passage de transport (28), les tubercules (40) sur ledit troisième moyen de transport (26) amenés vers ladite embouchure du passage de transport, pendant le service de la machine, rencontrant ainsi ledit moyen de rouleau (50) ou heurtant celui-ci en douceur, et étant déplacés en général vers le haut par ledit moyen de rouleau (50), dans l'embouchure du passage de transport.

13. Machine agricole mobile (10) selon la revendication 10, dans laquelle ladite partie d'extrémité (44) du troisième moyen de transport (26) et ladite extrémité inférieure (33) du deuxième moyen de transport (25) définissent entre elles une sortie d'éjection des déchets (46), à travers laquelle les saletés dégagées, les pierres ou d'autres débris (48) sont éjectés du système élévateur (22).

14. Machine agricole mobile (10) selon la revendication 10, dans laquelle ledit troisième moyen de transport comprend une courroie à pivot et dans laquelle les extrémités inférieures (32, 33) desdits premier et deuxième moyens de transport (24, 25) sont agencées chacune de manière suffisamment proche de ladite partie d'extrémité (44) du troisième moyen de transport (26) pour que les doigts de la courroie à pivot (35) des premier et deuxième moyens de transport (24, 25) touchent les doigts de la courroie à pivot (35) dudit troisième moyen de transport (26) agencé au-dessous.

15. Machine agricole mobile (10) selon les revendications 13 ou 14, dans laquelle ledit troisième moyen de transport (26) est agencé de manière suffisamment proche de ladite extrémité inférieure (33) du deuxième moyen de transport (25) pour empêcher pratiquement la sortie des tubercules (40) ayant un diamètre moyen minimal prédéterminé du système élévateur (22) à travers ladite sortie d'éjection des déchets (46).

16. Machine agricole mobile (10) selon l'une quelconque des revendications précédentes, dans laquelle lesdits premier et deuxième moyens de transport (24, 25) sont formés et agencés de sorte que le canal de transport (28) défini entre eux comporte au moins un coude pour entraîner un changement de direction des tubercules (40) qui y sont transportés.

17. Machine agricole mobile (52) selon la revendication 16, dans laquelle le système élévateur (22) comprend une section inférieure pratiquement verticale (57), dans laquelle le canal de transport s'étend de manière pratiquement verticale vers le haut, et une section supérieure pratiquement horizontale, dans laquelle le canal de transport (28) s'étend de manière pratiquement horizontale.

18. Machine agricole mobile (10) selon la revendication 16, dans laquelle les premier et deuxième moyens de transport (24, 25) sont formés et agencés de sorte que le canal de transport (28) comporte deux ou plusieurs coudes, de sorte que les tubercules (40) suivent une trajectoire plus ou moins arquée le long d'au moins une partie de leur trajectoire, lors de leur transport vers le haut d'un niveau vers un autre niveau par le système élévateur (22).

19. Machine agricole mobile (10) selon l'une quelconque des revendications 9, 10, 11, 13, 14, 15, 16, 17 et 18, dans laquelle une partie d'extrémité inférieure (92) du deuxième moyen de transport (25) est connectée par pivotement à une partie supérieure du deuxième moyen de transport, ladite partie d'extrémité inférieure (92) pouvant ainsi être pivotée à l'écart de la partie d'extrémité inférieure (32) du premier moyen de transport (24).

20. Machine agricole mobile (10) selon l'une quelconque des revendications précédentes, dans laquelle lesdits premier et deuxième moyens de transport comprennent au moins deux parties de transport connectées par pivotement, formées et agencées de sorte à permettre un changement de la direction du système élévateur (22).

21. Machine agricole mobile (10) selon l'une quelconque des revendications précédentes, la machine agricole mobile étant une récolteuse.

22. Machine agricole mobile (10) selon la revendication 1, la machine agricole mobile étant une récolteuse de pommes de terre.

23. Machine agricole mobile (10) selon les revendications 21 ou 22, dans laquelle la récolteuse (52) englobe en outre un moyen de calibrage et/ou de triage.

24. Machine agricole mobile (10) selon l'une quelconque des revendications 21 à 23, dans laquelle la récolteuse (52) englobe en outre une unité de nettoyage des tubercules (20) agencée entre le moyen de récolte des plantes racines (18) et ledit système élévateur (22).

25. Machine agricole mobile (10) selon la revendication 1, dans laquelle l'épaisseur de passage de transport entre les surfaces de transport opposées desdits premier et deuxième moyens de transport est ajustable.

26. Machine agricole mobile (10) selon la revendication 7, dans laquelle les positions d'au moins les extrémités inférieures desdits premier et deuxième moyens de transport sont ajustables par rapport audit troisième moyen de transport.
